(19) Europäisches Patentamt / European Patent Office / Office européen des brevets

(11) **EP 4 058 508 B1**

(12) **FASCICULE DE BREVET EUROPEEN**

(45) Date de publication et mention de la délivrance du brevet:
**08.11.2023 Bulletin 2023/45**

(21) Numéro de dépôt: **20816565.4**

(22) Date de dépôt: **10.11.2020**

(51) Classification Internationale des Brevets (IPC):
**H01M 10/0525** (2010.01) **H01M 50/426** (2021.01)
**C08J 5/22** (2006.01)

(52) Classification Coopérative des Brevets (CPC):
**C08J 5/22; H01M 10/0525; H01M 50/426;**
C08J 2327/16; C08J 2327/20; Y02E 60/10

(86) Numéro de dépôt international:
**PCT/FR2020/052050**

(87) Numéro de publication internationale:
**WO 2021/094681 (20.05.2021 Gazette 2021/20)**

(54) **MEMBRANE POLYMERE GELIFIEE POUR BATTERIE LI-ION**

GELIERTE POLYMERMEMBRAN FÜR LI-IONEN-BATTERIE

GELLED POLYMER MEMBRANE FOR LI-ION BATTERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.11.2019 FR 1912661**

(43) Date de publication de la demande:
**21.09.2022 Bulletin 2022/38**

(73) Titulaire: **ARKEMA FRANCE**
**92700 Colombes (FR)**

(72) Inventeurs:
• **BIZET, Stéphane**
**27470 SERQUIGNY (FR)**
• **SCHMIDT, Grégory**
**69491 PIERRE-BENITE CEDEX (FR)**
• **CHAUVEAU, Jérôme**
**27470 SERQUIGNY (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**EP-A2- 1 011 157      EP-B1- 1 011 157**
**US-A1- 2014 255 754      US-A1- 2015 303 003**
**US-A1- 2016 293 957**

**Description**

DOMAINE DE L'INVENTION

La présente invention a trait de manière générale au domaine du stockage d'énergie électrique dans des batteries secondaires rechargeables de type Li-ion. Plus précisément, l'invention concerne un film de polymère fluoré qui permet la fabrication d'une membrane dense gélifiée qui présente un très bon compromis entre conductivité ionique et tenue mécanique après gonflement. Cette membrane est destinée à une application de séparateur pour les batteries Li-ion.

ARRIERE-PLAN TECHNIQUE

Une batterie Li-ion comprend au moins une électrode négative ou anode couplée à un collecteur de courant en cuivre, une électrode positive ou cathode couplée avec un collecteur de courant en aluminium, un séparateur, et un électrolyte. L'électrolyte est constitué d'un sel de lithium, généralement l'hexafluorophosphate de lithium, mélangé à un solvant qui est un mélange de carbonates organiques, choisis pour optimiser le transport et la dissociation des ions. Une constante diélectrique élevée favorise la dissociation des ions, et donc, le nombre d'ions disponibles dans un volume donné, alors qu'une faible viscosité est favorable à la diffusion ionique qui joue un rôle essentiel, entre autres paramètres, dans les vitesses de charge et décharge du système électrochimique.

Les piles rechargeables ou secondaires sont plus avantageuses que les piles primaires (non rechargeables) car les réactions chimiques associées qui ont lieu aux électrodes positive et négative de la batterie sont réversibles. Les électrodes des cellules secondaires peuvent être régénérées plusieurs fois par l'application d'une charge électrique. De nombreux systèmes d'électrodes avancés ont été développés pour stocker la charge électrique. Parallèlement, de nombreux efforts ont été consacrés au développement d'électrolytes capables d'améliorer les capacités des cellules électrochimiques.

Situé entre les deux électrodes, le séparateur joue le rôle de barrière mécanique et électronique et de conducteur ionique. Il existe plusieurs catégories de séparateurs : des membranes polymères sèches, des membranes polymères gélifiées et des séparateurs micro- ou macroporeux imbibés d'électrolyte liquide.

Le marché des séparateurs est dominé par l'utilisation de polyoléfines (Celgard® ou Solupor®) produits par extrusion et/ou étirement. Les séparateurs doivent à la fois présenter de faibles épaisseurs, une affinité optimale pour l'électrolyte et une tenue mécanique suffisante. Parmi les alternatives les plus intéressantes aux polyoléfines, des polymères présentant une meilleure affinité vis-à-vis des électrolytes standards ont été proposés, afin de diminuer les résistances internes du système, tels que le poly(méthylméthacrylate) (PMMA), le poly(fluorure de vinylidène) (PVDF) et le poly(fluorure de vinylidène-hexafluoropropène) (P(VDF-co-HFP)).

Les membranes polymères sèches, sans solvant liquide, évitent l'utilisation de composants liquides inflammables comme dans les batteries Li-ion conventionnelles et permettent la réalisation de batteries plus fines et plus flexibles. Cependant, elles ont des propriétés bien inférieures à celles des électrolytes liquides, notamment pour la conductivité ionique. Une bonne conductivité est nécessaire pour le fonctionnement à haut débit exigé, par exemple, par les téléphones cellulaires et les satellites.

Les membranes denses gélifiées constituent une autre alternative aux séparateurs imbibés d'électrolyte liquide. On appelle membranes denses, des membranes qui n'ont plus aucune porosité libre. Elles sont gonflées par le solvant mais celui-ci, fortement lié chimiquement au matériau membranaire, a perdu toutes ses propriétés de solvatation ; le solvant traverse alors la membrane sans entraîner de soluté. Dans le cas de ces membranes, les espaces libres correspondent à ceux laissés entre elles par les chaînes de polymère et ont la taille des molécules organiques simples ou des ions hydratés.

L'avantage des membranes denses gélifiées est d'offrir un meilleur gage de sécurité par rapport à un séparateur à base d'électrolyte liquide. De plus, ce type de séparateur peut avoir un intérêt pour des technologies de cellule utilisant une feuille de lithium comme anode et ainsi limiter la formation des dendrites à la surface de l'anode.

La difficulté des membranes gélifiées est de concilier une conductivité ionique élevée tout en conservant une tenue mécanique suffisante après gonflement pour permettre une manipulation aisée du séparateur pour la fabrication de la cellule et résister aux contraintes mécaniques lors des cycles de charge/décharge de la batterie. Les électrolytes gélifiés contiennent une fraction significative de solvants (ou plastifiants), en plus du sel et du polymère de l'électrolyte lui-même.

Le poly(fluorure de vinylidène) (PVDF) et ses dérivés présentent un intérêt comme matériau constitutif principal du séparateur pour leur stabilité électrochimique, et pour leur constante diélectrique élevée qui favorise la dissociation des ions et donc la conductivité. Le copolymère P(VDF-co-HFP) (copolymère de fluorure de vinylidène (VDF) et d'hexafluoropropylène (HFP)) a été étudié en tant que membrane gélifiée car il présente une cristallinité inférieure au PVDF. De ce fait, l'intérêt de ces copolymères de P(VDF-co-HFP) est qu'ils permettent d'atteindre des gonflements plus importants et favoriser ainsi la conductivité.

Le document US 5296318 décrit des séparateurs à base de copolymères de VDF-HFP gonflés dans un électrolyte constitué d'un sel de lithium (LiPF$_6$) et d'un mélange de carbonates comme solvant. Les exemples décrits utilisent les Kynar Flex® 2801 et 2750 à respectivement 12% et 15% en poids d'HFP. De manière plus générale, ce brevet revendique un taux d'HFP optimal compris entre 8% et 25% en poids d'HFP. En dessous de 8% d'HFP, les auteurs mentionnent des difficultés liées à la mise en oeuvre de la membrane. Au-delà de 25%, la tenue mécanique devient insuffisante après gonflement. Le procédé de fabrication du séparateur est un procédé en voie solvant qui fait appel à l'utilisation d'un solvant très volatile, le tétrahydrofurane. La conductivité ionique rapportée dans les exemples 1 et 2 est de 0,3 mS/cm et 0,4 mS/cm, respectivement.

Ce document décrit la nécessité d'utiliser une étape supplémentaire de réticulation, pour les séparateurs à base de copolymère VDF-HFP ayant un taux d'HFP supérieur à 25% en poids, afin de renforcer leur tenue mécanique après gonflement. Ces copolymères donnent des résultats satisfaisants même après chauffage jusqu'à 70°C. Toutefois, le copolymère plastifié est soluble dans l'électrolyte liquide à des températures supérieures à 80°C. La fusion du film d'électrolyte sous contrainte constante peut entraîner l'écoulement de l'électrolyte et un court-circuit interne de la batterie, ce qui entraîne une décharge et un chauffage rapides.

Afin de résoudre ce problème, le document US 2019/088916 propose un séparateur non-poreux contenant des matériaux macromoléculaires qui sont gélifiables par un solvant organique dans la solution électrolytique, et forment un électrolyte gel polymère lors de l'addition de la solution électrolytique. Ce séparateur non-poreux comprend au moins un composé macromoléculaire synthétique ou un composé macromoléculaire naturel, et comprend en outre, comme matrice, au moins un matériau macromoléculaire qui ne peut pas être gélifié par un solvant organique. Les exemples montrent que le polymère non gélifiable est utilisé sous forme d'une membrane poreuse qui est imbibée d'une solution du polymère gélifiable. Cette approche impose donc une étape de fabrication complexe de la membrane poreuse du polymère non gélifiable, qui permet de contrôler le taux de porosité et la nature de la porosité (taille des pores et taux de porosité ouverte). De plus, le procédé de fabrication nécessite d'avoir recours à une étape en voie solvant pour imbiber les porosités de la membrane poreuse, ce qui présente l'inconvénient de l'utilisation de solvants et requiert une étape d'évaporation.

Par ailleurs, cette approche nécessite que les matériaux macromoléculaires gélifiables et non gélifiables soient de nature chimique très différente. Ceci implique une faible adhésion entre les matériaux macromoléculaires gélifiables et non gélifiables, ce qui peut être préjudiciable pour la pérennité des performances de la batterie. Enfin, la fraction de polymère gélifiable, responsable de la conductivité ionique, ne représente qu'une fraction de la membrane, ce qui ne permet pas d'optimiser la surface de contact de la partie conductrice ionique du séparateur avec les électrodes.

Le document US2016/293957 propose une batterie comprenant une électrode positive, une électrode négative et un électrolyte, et une résine à base de copolymères de VDF.

Il existe toujours un besoin de développer de nouveaux séparateurs gélifiés qui présentent un bon compromis entre conductivité ionique et tenue mécanique après gonflement, et qui sont adaptés à une mise en oeuvre simplifiée, sans nécessiter d'étapes de transformation préalable.

L'invention a donc pour but de remédier à au moins un des inconvénients de l'art antérieur, à savoir proposer un film polymérique apte à garder, après gonflement dans un solvant, une bonne tenue mécanique et une bonne conductivité ionique.

L'invention vise également à fournir un procédé de fabrication de ce film polymérique qui comprend une seule étape d'extrusion à partir d'une formulation à base de polymères fluorés.

L'invention concerne aussi les membranes polymères gélifiées comprenant ledit film polymérique, imprégné dans un électrolyte constitué d'un mélange de solvant(s) et de sel(s) de lithium.

Un autre objet de l'invention est un séparateur pour batterie secondaire Li-ion consistant, en tout ou partie, en ladite membrane polymère gélifiée.

Enfin, l'invention vise à fournir des batteries secondaires Li-ion rechargeables comprenant un tel séparateur.

RESUME DE L'INVENTION

La solution technique proposée par la présente invention est un film de polymère fluoré à base d'un mélange d'au moins deux polymères fluorés ayant des cristallinités différentes.

L'invention concerne en premier lieu un film non-poreux de polymère fluoré comprenant au moins une couche, ladite couche consistant en un mélange de deux polymères fluorés : un polymère fluoré A qui comprend au moins un copolymère de fluorure de vinylidène (VDF) et d'hexafluoropropylène (HFP) ayant un taux d'HFP supérieur ou égal à 3% en poids, et un polymère fluoré B qui comprend un homopolymère de VDF et/ou au moins un copolymère VDF-HFP, ledit polymère fluoré B ayant un taux massique d'HFP inférieur d'au moins 3% en poids par rapport au taux massique d'HFP du polymère A.

Le polymère fluoré A comprend au moins un copolymère VDF-HFP ayant un taux d'HFP supérieur ou égal à 3% en poids, de préférence supérieur ou égal à 8%, avantageusement supérieur ou égal à 13%.

Son taux massique dans la formulation de film fluoré est supérieur ou égal à 10% en poids et inférieur ou égal à 99%, préférentiellement supérieur ou égal à 25 % et inférieur ou égal à 95%, préférentiellement supérieur ou égal à 50% et inférieur ou égal à 95%.

Le polymère fluoré B comprend au moins un copolymère VDF-HFP ayant un taux massique d'HFP inférieur d'au moins 3% par rapport au taux massique d'HFP du polymère A. Son taux massique dans la formulation de film fluoré est inférieur ou égal à 90% et supérieur à 1%, de préférence il est inférieur à 75% et supérieur à 5%, et avantageusement inférieur à 50% et supérieur à 5%.

Selon un mode de réalisation, ledit film de polymère fluoré est monocouche.

Selon un autre mode de réalisation, ledit film de polymère fluoré comprend au moins deux couches de polymères, dont au moins une est constituée du mélange de deux polymères fluorés décrit plus haut.

L'invention concerne également une membrane polymère gélifiée comprenant le film de polymère fluoré décrit ci-dessus, et un électrolyte comprenant au moins un solvant et au moins un sel de lithium et éventuellement au moins un additif.

Selon un mode de réalisation, ledit solvant est choisi parmi les carbonates d'alkyles cycliques et acycliques, les éthers, les formates, les nitriles, les esters et les lactones.

Un autre objet de l'invention est un séparateur pour batterie rechargeable Li-ion, consistant, en tout ou partie, en la membrane polymère gélifiée décrite ci-dessus.

Un autre objet de l'invention est une batterie secondaire Li-ion comprenant une électrode négative, une électrode positive et un séparateur, dans laquelle ledit séparateur comprend une membrane polymère gélifiée telle que décrite ci-dessus.

La présente invention permet de surmonter les inconvénients de l'état de la technique. Elle fournit plus particulièrement un film non-poreux de polymère fluoré capable, après gonflement dans un électrolyte et en présence de sels de lithium, de fournir un séparateur qui réunit une conductivité ionique élevée et une tenue mécanique suffisante pour permettre une manipulation aisée du séparateur.

L'avantage de cette technologie est d'offrir un meilleur gage de sécurité par rapport à un séparateur à base d'électrolyte liquide. De plus, ce type de séparateur peut avoir un intérêt pour des technologies de cellule utilisant une feuille de lithium comme anode et ainsi limiter la formation des dendrites à la surface de l'anode.

## DESCRIPTION DE MODES DE REALISATION DE L'INVENTION

L'invention est maintenant décrite plus en détail et de façon non limitative dans la description qui suit.

Selon un premier aspect, l'invention concerne un film non-poreux de polymère fluoré comprenant au moins une couche, ladite couche consistant en un mélange de deux polymères fluorés : un polymère fluoré A qui comprend au moins un copolymère de fluorure de vinylidène (VDF) et d'hexafluoropropylène (HFP) ayant un taux d'HFP supérieur ou égal à 3% en poids, et un polymère fluoré B qui comprend un homopolymère de VDF et/ou au moins un copolymère VDF-HFP, ledit polymère fluoré B ayant un taux massique d'HFP inférieur d'au moins 3% en poids par rapport au taux massique d'HFP du polymère A.

Selon diverses réalisations, ledit film comprend les caractères suivants, le cas échéant combinés. Les teneurs indiquées sont exprimées en poids, sauf si indiqué autrement.

Selon un premier mode de réalisation, ledit film est constitué d'une seule couche.

Le polymère fluoré A comprend au moins un copolymère VDF-HFP ayant un taux d'HFP supérieur ou égal à 3% en poids, de préférence supérieur ou égal à 8%, avantageusement supérieur ou égal à 13%. Ledit copolymère VDF-HFP a un taux d'HFP inférieur ou égal à 55%, de préférence à 50%.

Ce copolymère très peu cristallin gonfle facilement dans les solvants des électrolytes, ce qui permet d'apporter au film une bonne conductivité ionique. Le gonflement peut être quantifié par la prise en masse du film en électrolyte. Avantageusement, la prise en masse de ce copolymère est au moins supérieure ou égale à 5% en poids.

Selon un mode de réalisation, le polymère fluoré A est constitué d'un seul copolymère VDF-HFP à taux d'HFP supérieur ou égal à 3%. Selon un mode de réalisation, le taux d'HFP dans ce copolymère VDF-HFP est compris entre 13% et 55% bornes comprises, préférentiellement entre 15% et 50% bornes comprises.

Selon un mode de réalisation, le polymère fluoré A est constitué d'un mélange de deux ou plusieurs copolymères VDF-HFP, le taux d'HFP de chaque copolymère étant supérieur ou égal à 3%. Selon un mode de réalisation, chacun des copolymères a un taux d'HFP compris entre 13% et 55% bornes comprises, préférentiellement entre 15% et 50% bornes comprises.

La composition molaire des motifs dans les polymères fluorés peut être déterminée par divers moyens tels que la spectroscopie infrarouge ou la spectroscopie RAMAN. Les méthodes classiques d'analyse élémentaire en éléments carbone, fluor et chlore ou brome ou iode, telle que la spectroscopie à fluorescence X, permettent de calculer sans ambiguïté la composition massique des polymères, d'où l'on déduit la composition molaire.

On peut également mettre en oeuvre les techniques de RMN multi-noyaux, notamment proton (1H) et fluor (19F), par analyse d'une solution du polymère dans un solvant deutéré approprié. Le spectre RMN est enregistré sur un spectromètre RMN-FT équipé d'une sonde multi-nucléaire. On repère alors les signaux spécifiques donnés par les différents monomères dans les spectres réalisés selon l'un ou l'autre noyau.

Le polymère fluoré B comprend au moins un copolymère VDF-HFP ayant un taux massique d'HFP inférieur d'au moins 3% par rapport au taux massique d'HFP du polymère A.

Selon un mode de réalisation, le polymère fluoré B est un homopolymère de fluorure de vinylidène (VDF) ou un mélange d'homopolymères de fluorure de vinylidène.

Selon un mode de réalisation, le polymère fluoré B est constitué d'un seul copolymère VDF-HFP. Selon un mode de réalisation, le taux d'HFP dans ce copolymère VDF-HFP est compris entre 1% et 5% bornes comprises. Selon un autre mode de réalisation, le taux d'HFP dans ce copolymère VDF-HFP est compris entre 1% et 10% bornes comprises.

Selon un mode de réalisation, le polymère fluoré B est un mélange de PVDF homopolymère avec un copolymère VDF-HFP ou bien un mélange de deux ou plusieurs copolymères VDF-HFP.

Selon un mode de réalisation ledit mélange comprend :

**i.** un taux massique de polymère A supérieur ou égal à 10% et inférieur ou égal à 99%, préférentiellement supérieur ou égal à 50% et inférieur ou égal à 95%, avantageusement supérieur ou égal à 25 % et inférieur ou égal à 95%, et
**ii.** un taux massique de polymère B inférieur ou égal à 90% et supérieur à 1%, de préférence inférieur à 50% et supérieur à 5%.

Selon un mode de réalisation, ledit film de polymère fluoré monocouche présente une épaisseur de 1 à 1000 $\mu$m, de préférence de 1 $\mu$m à 500 $\mu$m, et encore plus préférentiellement entre 5 $\mu$m et 100 $\mu$m.

Avantageusement, dans le film de polymère fluoré selon l'invention, les polymères fluorés A et B sont mélangés de sorte à obtenir un mélange intime de ces polymères ; dans ce mélange, chacun des polymères A et B se trouve à l'état fondu.

Selon un mode de réalisation, lorsque le film est monocouche, ledit film de polymère fluoré peut-être fabriqué par un procédé en voie solvant. Les polymères A et B sont solubilisés dans un solvant connu du polyfluorure de vinylidène ou de ses copolymères. A titre d'exemples non exhaustifs, on peut citer comme solvant la n-méthyl-2-pyrrolidone, le diméthyl sulfoxyde, le diméthyl formamide, la méthyl éthyl cétone, l'acétone. Le film est obtenu après dépôt de la solution sur un substrat plan et évaporation du solvant.

Selon un mode de réalisation, ledit film de polymère fluoré est un film multicouche dont l'une au moins des couches est composée d'un mélange de polymères A et B selon l'invention. L'épaisseur globale du film multicouche est comprise entre 2 $\mu$m et 1000$\mu$m, l'épaisseur de la couche de polymère fluoré selon l'invention étant comprise entre 1 $\mu$m et 999$\mu$m.

La ou les couches additionnelles sont choisies parmi les compositions polymériques suivantes :

- composition consistant en un polymère fluoré choisi parmi les homopolymères du fluorure de vinylidène et les copolymères VDF-HFP contenant de préférence au moins 90 % en masse de VDF ;
- composition consistant en un mélange de polymère fluoré, choisi parmi les homopolymères du fluorure de vinylidène et les copolymères VDF-HFP contenant de préférence au moins 85 % en masse de VDF, avec un homopolymères du méthacrylate de méthyle (MMA) et les copolymères contenant au moins 50% en masse de MMA et au moins un autre monomère copolymérisable avec le MMA. A titre d'exemple de comonomère copolymérisable avec le MMA, on peut citer les (méth)acrylates d'alkyle, l'acrylonitrile, le butadiène, le styrène, l'isoprène. Avantageusement, le polymère (homopolymère ou copolymère) de MMA comprend en masse de 0 à 20% et de préférence 5 à 15% d'un (méth)acrylate d'alkyle en C1-C8, qui est de préférence l'acrylate de méthyle et/ou l'acrylate d'éthyle. Le polymère (homopolymère ou copolymère) de MMA peut être fonctionnalisé, c'est-à-dire qu'il contient par exemple des fonctions acide, chlorure d'acide, alcool, anhydride. Ces fonctions peuvent être introduites par greffage ou par copolymérisation. Avantageusement, la fonctionnalité est en particulier la fonction acide apportée par le comonomère acide acrylique. On peut aussi utiliser un monomère à deux fonctions acide acrylique voisines qui peuvent se déshydrater pour former un anhydride. La proportion de fonctionnalité peut être de 0 à 15% en masse du polymère de MMA par exemple de 0 à 10% en masse.

Selon un mode de réalisation, ledit film de polymère fluoré est fabriqué par un procédé de transformation des polymères à l'état fondu tel que l'extrusion à plat, l'extrusion par soufflage de gaine, le calandrage, la thermocompression.

Selon un mode de réalisation, avant l'étape de fabrication du film, les polymères fluorés A et B sont mélangés intimement à l'état fondu, par extrusion à l'aide d'une extrudeuse bi-vis ou d'un comalaxeur.

L'invention concerne également une membrane polymère gélifiée comprenant le film de polymère fluoré décrit ci-dessus, et un électrolyte comprenant au moins un solvant et au moins un sel de lithium.

Selon un mode de réalisation, la membrane comprend en outre des charges inorganiques telles que les oxydes de silicium, le dioxyde de titane, les oxydes d'aluminium, la zircone. Le taux massique des charges inorganiques est inférieur ou égal à 25% par rapport au poids des polymères fluorés A et B.

Selon un mode de réalisation, la membrane comprend en outre des électrolytes solides tels que les super conducteurs ioniques de lithium [Lithium superionic conductor (LISICON)] et dérivés, les thio-LISICON, les structures de type $Li_4SiO_4$-$Li_3PO_4$, les super conducteurs ioniques de sodium et dérivés [Sodium superionic conductor (NASICON)], les structures de type $Li_{1.3}Al_{0.3}Ti_{1.7}(PO_4)_3$ (LATP), les structures grenats (garnet) $Li_7La_3Zr_2O_{12}$ (LLZO) et dérivés, les structures perovskite $Li_{3x}La_{2/3-2x}\square_{1/3-2x}TiO_3$ (0<x<0,16) (LLTO) et les sulfures amorphes, cristallins ou semi-cristallins. Le taux massique des électrolytes solides est inférieur ou égal à 10% par rapport au poids des polymères fluorés A et B.

Selon un mode de réalisation, ledit solvant est choisi parmi les carbonates d'alkyles cycliques et acycliques, les éthers, les glymes, les formates, les esters et les lactones.

Parmi les éthers, on peut citer les éthers linéaires ou cycliques, tels que le diméthoxyéthane (DME), les éthers méthyliques des oligoéthylène glycols de 2 à 100 unités oxyéthylènes, le dioxolane, le dioxane, le dibutyle éther, le tétrahydrofurane, et leurs mélanges.

Parmi les esters, on peut citer les esters d'acide phosphorique et les esters de sulfite. On peut par exemple citer le formate de méthyle, l'acétate de méthyle, le propionate de méthyle, l'acétate d'éthyle, l'acétate de butyle ou leurs mélanges.

Les glymes utilisés sont de formule générale $R_1$-O-$R_2$-O-$R_3$ où $R_1$ et $R_3$ sont des alkyles linéaires de 1 à 5 carbones et $R_2$ une chaine alkyle linéaire ou ramifiée de 3 à 10 carbones.

Parmi les lactones, on peut notamment citer la gamma-butyrolactone.

Parmi les nitriles, on peut citer par exemple l'acétonitrile, le pyruvonitrile, le propionitrile, le méthoxypropionitrile, le diméthylaminopropionitrile, le butyronitrile, l'isobutyronitrile, le valéronitrile, le pivalonitrile, l'isovaléronitrile, le glutaronitrile, le méthoxyglutaronitrile, le 2-méthylglutaronitrile, le 3-méthylglutaronitrile, l'adiponitrile, le malononitrile, et leurs mélanges.

Parmi les carbonates, on peut citer par exemple les carbonates cycliques tels que par exemple le carbonate d'éthylène (EC) (CAS : 96-49-1), le carbonate de propylène (PC) (CAS : 108-32-7), le carbonate de butylène (BC) (CAS : 4437-85-8), le carbonate de diméthyle (DMC) (CAS : 616-38-6), le carbonate de diéthyle (DEC) (CAS : 105-58-8), le carbonate de méthyle éthyle (EMC) (CAS : 623-53-0), le carbonate de diphényle(CAS 102-09-0), le carbonate de méthyle phényle (CAS : 13509-27-8), le carbonate de dipropyle (DPC) (CAS : 623-96-1), le carbonate de méthyle et de propyle (MPC) (CAS : 1333-41-1), le carbonate d'éthyle et de propyle (EPC), le carbonate de vinylène (VC) (CAS : 872-36-6), le fluoroethylène carbonate (FEC) (CAS : 114435-02-8), le trifluoropropylène carbonate (CAS : 167951-80-6) ou leurs mélanges.

Selon un mode de réalisation, ledit sel de lithium est choisi parmi : le $LiPF_6$ (hexafluorophosphate de lithium), le LiFSI (bis(fluorosulfonyl)imidure de lithium), le LiTDI (2-trifluorométhyl-4,5-dicyano-imidazolate de lithium), le $LiPOF_2$, le $LiB(C_2O_4)_2$, le LiF2B(C2O4)2, le $LiBF_4$, le $LiNO_3$, le $LiClO_4$.

Selon un mode de réalisation, l'électrolyte comprend, en plus du solvant et du sel de lithium, au moins un additif. L'additif peut être choisi parmi le groupe constitué du carbonate de fluoroéthylène (FEC), du carbonate de vinylène, du 4-vinyl-1,3-dioxolan-2-one, de la pyridazine, de la vinyl pyridazine, de la quinoline, de la vinyl quinoline, du butadiène, du sébaconitrile, des alkyldisulfure, du fluorotoluène, du 1,4-diméthoxytétrafluorotoluène, du t-butylphenol, du di-t-butylphenol, du tris(pentafluorophenyl)borane, des oximes, des époxydes aliphatiques, des biphényls halogénés, des acides métacryliques, du carbonate d'allyle éthyle, de l'acétate de vinyle, de l'adipate de divinyle, du propanesultone, de l'acrylonitrile, du 2-vinylpyridine, de l'anhydride maléïque, du cinnamate de méthyle, des phosphonates, des composés silane contenant un vinyle, du 2-cyanofurane.

L'additif peut également être choisi parmi les sels possédant une température de fusion inférieure à 100 °C tels que les liquides ioniques, qui forment des liquides seulement constitués de cations et d'anions.

A titre d'exemples de cations organiques, on peut citer en particulier les cations : ammonium, sulfonium, pyridinium, pyrrolidinium, imidazolium, imidazolinium, phosphonium, lithium, guanidinium, piperidinium, thiazolium, triazolium, oxazolium, pyrazolium, et leurs leurs mélanges.

A titre d'exemple d'anions, on peut citer notamment les imides, notamment bis(trifluorométhanesulfonyl)imide (abrégé NTf2-) ; les borates, notamment tétrafluoroborate (abrégé BF4-) ; les phosphates, notamment hexafluorophosphate (abrégé PF6-) ; les phosphinates et les phosphonates, notamment les alkyl-phosphonates ; les amides, notamment dicyanamide (abrégé DCA-) ; les aluminates, notamment tetrachloroaluminate (AlCl4-), les halogénures (tels que les anions bromure, chlorure, iodure), les cyanates, les acétates (CH3COO-), notamment trifluoroacétate ; les sulfonates, notamment méthanesulfonate (CH3SO3-), trifluorométhanesulfonate ; les sulfates, notamment hydrogène sulfate.

Selon un mode de réalisation, ledit électrolyte présente une concentration de sel de 0,05 moles/litre à 5 moles/litre dans le solvant.

Selon un mode de réalisation, dans la membrane selon l'invention, le rapport électrolyte/ polymères fluorés est de 0,05 à 20, préférentiellement de 0,1 à 10.

Selon un mode de réalisation, la membrane selon l'invention présente une conductivité ionique allant de 0,01 à 5 mS/cm. La conductivité est mesurée par spectroscopie d'impédance.

Selon un mode de réalisation, la membrane selon l'invention présente une tenue mécanique caractérisée par un module élastique, mesuré à 1Hz et 23°C par analyse mécanique dynamique, supérieur à 0,01 MPa, préférentiellement supérieur à 0,1 MPa.

Une cellule de conductivité est alors plongée dans chacune des solutions et trois spectroscopies d'impédance ont été réalisées. Ces spectroscopies sont réalisées entre 500 mHz et 100 kHz avec une amplitude de 10 mV. La constante de la cellule utilisée est de 1,12 et la conductivité ionique est calculée selon la formule suivante :

$$\sigma = \frac{1}{R} \times 1,12$$

où R représente la résistance qui est obtenue par régression linéaire de la courbe Im(Z) = f (Re(Z)). Dans le cas particulier de Im(Z) = 0, R est égale à l'opposé de l'ordonnée à l'origine divisée par le coefficient directeur de l'équation de la régression linéaire.

Selon un mode de réalisation, dans la membrane selon l'invention ledit film présente une prise en masse au moins supérieure ou égale à 5% en poids, de préférence allant de 10% à 1000%.

Avantageusement, le séparateur selon l'invention est non-poreux, ce qui signifie que la perméabilité aux gaz du séparateur est de 0 ml/min, telle que détectée par l'essai de perméabilité aux gaz (lorsque la surface du séparateur est de 10 cm$^2$, la différence de pression de gaz entre les deux côtés est de 1 atm, et le temps est de 10 minutes).

Selon un mode de réalisation, la membrane polymère gélifiée est obtenue à partir de la succession des étapes suivantes :

- Réalisation d'un mélange des polymères fluorés A et B par un procédé de mélange à l'état fondu tel que l'extrusion en double-vis.
- Fabrication d'un film par extrusion du mélange à l'aide d'un procédé d'extrusion par soufflage de gaine ou d'extrusion à plat.
- Imprégnation du film obtenue par immersion dans un électrolyte constitué d'un solvant et d'un sel de lithium jusqu'à saturation du film. Le film ainsi obtenu constitue la membrane gélifiée destinée à être incorporée dans une cellule de batterie lithium-ion. Une variante de l'étape d'imprégnation est possible. Le film peut être mis en place dans la cellule à l'état sec et l'électrolyte ajouté dans un second temps, l'imprégnation de l'électrolyte dans la membrane s'effectuant in-situ de la cellule.

Un autre objet de l'invention est un séparateur pour batterie secondaire Li-ion consistant, en tout ou partie, en ladite membrane polymère gélifiée. Selon un mode de réalisation, ledit séparateur contient une seule membrane polymère gélifiée selon l'invention. Selon un autre mode de réalisation, ledit séparateur consiste en un film multicouche dont chaque couche a la composition du film selon l'invention. Avantageusement, dans le séparateur selon l'invention la membrane n'est pas supportée par un support.

Un autre objet de l'invention est une batterie secondaire Li-ion comprenant une électrode négative, une électrode positive et un séparateur, dans laquelle ledit séparateur comprend une membrane polymère gélifiée telle que décrite ci-dessus.

EXEMPLES

Les exemples suivants illustrent de façon non limitative la portée de l'invention.

Produits :

PVDF 1: Copolymère de fluorure de vinylidène (VDF) et d'hexafluorure de vinylidène (HFP) à 25% en poids d'HFP, caractérisé par une viscosité à l'état fondu de 1000 Pa.s à 100 s$^{-1}$ et 230°C.
PVDF 2: Copolymère de fluorure de vinylidène (VDF) et d'hexafluorure de vinylidène (HFP) à 18% en poids d'HFP, caractérisé par une viscosité à l'état fondu de 1200 Pa.s à 100 s$^{-1}$ et 230°C.
PVDF 3: Homopolymère de fluorure de vinylidène caractérisé par une viscosité à l'état fondu de 1000 Pa.s à 100 s$^{-1}$ et 230°C.
PVDF 4 (Kynarflex 2750-10) : Copolymère de fluorure de vinylidène (VDF) et d'hexafluorure de vinylidène (HFP) à 15% en poids d'HFP caractérisé par une viscosité à l'état fondu de 900 Pa.s à 100 s$^{-1}$ et 230°C

PVDF 5 (Kynarflex 2801) : Copolymère de fluorure de vinylidène (VDF) et d'hexafluorure de vinylidène (HFP) à 12% en poids d'HFP caractérisé par une viscosité à l'état fondu de 2500 Pa.s à 100 s$^{-1}$ et 230°C

Sel de Lithium : Lithium bis(fluorosulfonyl)imide (LiFSI) commercialisé par Arkema

Préparation des mélanges de polymères fluorés à différents taux d'HFP et fabrication des films:

Les mélanges de polymères fluorés ont été réalisés avec une extrudeuse bi-vis de laboratoire de type Haake® 2. Les films ont été obtenus en utilisant une méthode d'extrusion à plat avec une extrudeuse monovis de laboratoire de type Randcastle équipée d'une filière plate. L'épaisseur obtenue est d'environ 50 $\mu$m pour chaque film.

Le Tableau 1 illustre la composition des films préparés selon l'invention et des films pour les exemples comparatifs.

[Tableau 1]

|  | Exemple 1 | Exemple 2 | Exemple comparatif 1 | Exemple comparatif 2 | Exemple comparatif 3 | Exemple comparatif 4 |
|---|---|---|---|---|---|---|
| PVDF 1 | 75 |  | 100 |  |  |  |
| PVDF 2 |  | 90 |  | 100 |  |  |
| PVDF 3 | 25 | 10 |  |  |  |  |
| PVDF 4 |  |  |  |  | 100 |  |
| PVDF 5 |  |  |  |  |  | 100 |

**Imprégnation des films dans l'électrolyte :**

Les films ont été imprégnés dans un électrolyte constitué d'un mélange de carbonate d'éthyle méthyle (EMC) et de LiFSI à une concentration d'une mole par litre. Pour ce faire, un disque de 16 mm de diamètre est découpé dans le film puis immergé pendant une heure à 30°C dans l'électrolyte. La prise en masse du film est mesurée par différence entre les masses avant et après immersion dans l'électrolyte.

**Mesure de la conductivité ionique de la membrane après gonflement dans l'électrolyte :**

La conductivité est mesurée par spectroscopie d'impédance en plaçant le film de polymère fluoré gonflé entre deux électrodes constituées de feuilles de Lithium. Le Tableau 2 illustre les valeurs de conductivité ionique et de prise en masse des films après immersion dans l'électrolyte EMC +1M LiFSI.

Tableau 2]

|  | Exemple 1 | Exemple 2 | Exemple comparatif 1 | Exemple comparatif 2 | Exemple comparatif 3 | Exemple comparatif 4 |
|---|---|---|---|---|---|---|
| % en poids d'HFP dans la formulation | 18,75 | 16,2 | 25 | 18 | 15 | 12 |
| Prise en masse (% en poids) | 190 | 200 | Film dissous | Film dissous | 86 | 30 |
| Conductivité (mS/cm) | 0,4 | 0,6 | Non mesurable | Non mesurable | 0,11 | 0,04 |

Les exemples 1 et 2 montrent qu'on obtient une conductivité plus élevée que les polymères des exemples comparatifs 3 et 4 décrits dans la littérature (US5296318). Cette meilleure conductivité provient notamment du gonflement qui est supérieur.

De plus, les films des exemples 1 et 2 après gonflement conservent une bonne tenue mécanique contrairement aux exemples comparatifs 1 et 2, pour lesquels les films se dissolvent dans l'électrolyte et ne sont pas utilisables. La bonne tenue mécanique des films gonflés est caractérisée par le fait que le film reste sous forme de film intègre et manipulable, contrairement aux film des exemples comparatifs 1 et 2 qui se dissolvent dans l'électrolyte.

Enfin, la comparaison de l'exemple 1 avec l'exemple comparatif 2 montre qu'il est possible d'obtenir de meilleures propriétés (mécanique, conductivité ionique) avec une formulation selon l'invention par rapport à un polymère fluoré utilisé de l'art antérieur à même taux global d'HFP. Ainsi, le copolymère de l'exemple comparatif 2 à 18% en poids d'HFP est dissout dans l'électrolyte ce qui rend le film non manipulable, et sa conductivité ionique non mesurable.


**Revendications**

1. Film non-poreux de polymère fluoré comprenant au moins une couche, ladite couche consistant en un mélange de deux polymères fluorés : un polymère fluoré A qui comprend au moins un copolymère de fluorure de vinylidène (VDF) et d'hexafluoropropylène (HFP) ayant un taux d'HFP supérieur ou égal à 3% en poids, et un polymère fluoré B qui comprend un homopolymère de VDF et/ou au moins un copolymère VDF-HFP, ledit polymère fluoré B ayant un taux massique d'HFP inférieur d'au moins 3% en poids par rapport au taux massique d'HFP du polymère A.

2. Film selon la revendication 1, dans lequel le taux d'HFP dans ledit au moins un copolymère de VDF-HFP entrant dans la composition dudit polymère fluoré A est supérieur ou égal à 8% et inférieur ou égal à 55%.

3. Film selon la revendication 1, dans lequel le polymère fluoré A est constitué d'un seul copolymère VDF-HFP à taux d'HFP supérieur ou égal à 3%.

4. Film selon la revendication 1, dans lequel le polymère fluoré A est constitué d'un mélange de deux ou plusieurs copolymères VDF-HFP, le taux d'HFP de chaque copolymère est supérieur ou égal à 3%.

5. Film selon l'une des revendications 1 à 4, dans lequel le polymère fluoré B est un homopolymère de fluorure de vinylidène ou un mélange d'homopolymères de fluorure de vinylidène.

6. Film selon l'une des revendications 1 à 4, dans lequel le polymère fluoré B est constitué d'un seul copolymère VDF-HFP ayant un taux d'HFP compris entre 1 et 10%.

7. Film selon l'une des revendications 1 à 6, dans lequel ledit mélange comprend :

   i. un taux massique de polymère A supérieur ou égal à 10% et inférieur ou égal à 99%, préférentiellement supérieur ou égal à 50% et inférieur ou égal à 95%, avantageusement supérieur ou égal à 25 % et inférieur ou égal à 95%, et
   ii. un taux massique de polymère B inférieur ou égal à 90% et supérieur à 1%, de préférence inférieur à 50% et supérieur à 5%.

8. Film selon l'une des revendications 1 à 7, ledit film étant constitué d'une seule couche ayant une épaisseur de 1 à 1000 $\mu$m, de préférence de 1 à 500 $\mu$m et plus préférentiellement de 5$\mu$m à 100$\mu$m,

9. Film selon l'une des revendications 1 à 7, ledit film ayant plusieurs couches dont l'une au moins consistant en un mélange desdits polymères A et B, l'épaisseur globale du film multicouche étant comprise entre 2 $\mu$m et 1000$\mu$m,

10. Film selon la revendication 9, dans lequel la ou les couches additionnelles sont choisies parmi les compositions polymériques suivantes :

    o composition consistant en un polymère fluoré choisi parmi les homopolymères du fluorure de vinylidène et les copolymères VDF-HFP contenant de préférence au moins 90 % en masse de VDF ;
    o composition consistant en un mélange de polymère fluoré, choisi parmi les homopolymères du fluorure de vinylidène et les copolymères VDF-HFP contenant de préférence au moins 85 % en masse de VDF, avec un homopolymères du méthacrylate de méthyle (MMA) et les copolymères contenant au moins 50% en masse de MMA et au moins un autre monomère copolymérisable avec le MMA choisi parmi : les (méth)acrylates d'alkyle, l'acrylonitrile, le butadiène, le styrène, l'isoprène.

11. Membrane polymère gélifiée comprenant le film de polymère fluoré selon l'une des revendications 1 à 10, et un électrolyte comprenant au moins un solvant et au moins un sel de lithium.

12. Membrane selon la revendication 11, dans laquelle ledit solvant est choisi parmi les carbonates d'alkyles cycliques et acycliques, les éthers, les glymes, les formates, les esters et les lactones.

13. Membrane selon l'une des revendications 11 ou 12, dans laquelle ledit sel de lithium est choisi parmi : le LiPF6 (hexafluorophosphate de lithium), le LiFSI (bis(fluorosulfonyl)imidure de lithium), le LiTDI (2-trifluorométhyl-4,5-dicyano-imidazolate de lithium), le LiPOF2, le LiB(C2O4)2, le LiF2B(C2O4)2, le LiBF4, le LiNO3, le LiClO4.

14. Membrane selon l'une des revendications 11 à 13, dans laquelle ledit électrolyte présente une concentration de sel de 0,05 à 5 moles /litre dans le solvant.

15. Membrane selon l'une des revendications 11 à 14, dans laquelle le rapport électrolyte/ polymères fluorés est de 0,05 à 20 et préférentiellement de 0,1 à 10.

16. Séparateur pour batterie rechargeable Li-ion, consistant, en la membrane polymère gélifiée selon l'une des revendications 11 à 15.

17. Batterie secondaire Li-ion comprenant une anode, une cathode et un séparateur, dans laquelle ledit séparateur comprend une membrane polymère gélifiée selon l'une des revendications 11 à 15.

**Patentansprüche**

1. Nicht-poröse Folie aus Fluorpolymer, die mindestens eine Schicht umfasst, wobei die Schicht aus einer Mischung von zwei Fluorpolymeren besteht: einem Fluorpolymer A, das mindestens ein Copolymer von Vinylidenfluorid (VDF) und Hexafluorpropylen (HFP) mit einem Gehalt an HFP von mindestens 3 Gewichts-% umfasst, und einem Fluorpolymer B, das ein VDF-Homopolymer und/oder mindestens ein VDF-HFP-Copolymer umfasst, wobei das Fluorpolymer B einen massenbezogenen Gehalt an HFP aufweist, der um mindestens 3 Gewichts-% geringer als der massenbezogene Gehalt an HFP des Polymers A ist.

2. Folie nach Anspruch 1, wobei der Gehalt an HFP in dem mindestens einen VDF-HFP-Copolymer, welches der Zusammensetzung des Fluorpolymers A beigefügt wird, mindestens 8 % und höchstens 55 % beträgt.

3. Folie nach Anspruch 1, wobei das Fluorpolymer A aus einem einzigen VDF-HFP-Copolymer besteht, dessen Gehalt an HFP mindestens 3 % beträgt.

4. Folie nach Anspruch 1, wobei das Fluorpolymer A aus einer Mischung von zwei oder mehreren VDF-HFP-Copolymeren besteht, wobei der Gehalt an HFP der Copolymere jeweils mindestens 3 % beträgt.

5. Folie nach einem der Ansprüche 1 bis 4, wobei es sich bei dem Fluorpolymer B um ein Homopolymer von Vinylidenfluorid oder um eine Mischung aus Homopolymeren von Vinylidenfluorid handelt.

6. Folie nach einem der Ansprüche 1 bis 4, wobei das Fluorpolymer B aus einem einzigen VDF-HFP-Copolymer mit einem Gehalt an HFP im Bereich von 1 bis 10 % besteht.

7. Folie nach einem der Ansprüche 1 bis 6, wobei die Mischung Folgendes umfasst:

   i. einen massenbezogenen Gehalt an Polymer A von mindestens 10 % und höchstens 99 %, vorzugsweise von mindestens 50 % und höchstens 95 %, vorteilhafterweise von mindestens 25 % und höchstens 95 %, und
   ii. einen massenbezogenen Gehalt an Polymer B von höchstens 90 % und mehr als 1 %, vorzugsweise von weniger als 50 % und mehr als 5 %.

8. Folie nach einem der Ansprüche 1 bis 7, wobei die Folie aus einer einzigen Schicht mit einer Dicke von 1 à 1000 um, vorzugsweise von 1 bis 500 $\mu$m und stärker bevorzugt von 5 $\mu$m bis 100 $\mu$m besteht.

9. Folie nach einem der Ansprüche 1 bis 7, wobei die Folie mehrere Schichten aufweist, von denen mindestens eine aus einer Mischung der Polymere A und B besteht, wobei die Gesamtdicke der mehrschichtigen Folie im Bereich von 2 $\mu$m bis 1000 $\mu$m liegt.

**10.** Folie nach Anspruch 9, wobei die zusätzliche(n) Schicht(en) aus den folgenden Polymerzusammensetzungen ausgewählt sind:

    o einer Zusammensetzung, die aus einem Fluorpolymer besteht, welches aus Homopolymeren von Vinylidenfluorid und aus VDF-HFP-Copolymeren, wobei diese vorzugsweise mindestens 90 Massen-% an VDF enthalten, ausgewählt ist;

    o einer Zusammensetzung, die aus einer Mischung von Fluorpolymer, welches aus Homopolymoren von Vinylidenfluorid und aus VDF-HFP-Copolymeren ausgewählt ist, wobei diese vorzugsweise mindestens 85 Massen-% an VDF enthalten, mit einem Homopolymer von Methylmethacrylat (MMA) und mit Copolymeren besteht, welche mindestens 50 Massen-% an MMA und mindestens ein weiteres Monomer enthalten, wobei dieses mit MMA copolymerisierbar ist und aus den folgenden ausgewählt ist: den Alkyl(meth)acrylaten, Acrylnitril, Butadien, Styrol, Isopren.

**11.** Gelierte Polymermembran, welche die Fluorpolymerfolie nach einem der Ansprüche 1 bis 10 sowie einen Elektrolyten umfasst, welcher mindestens ein Lösungsmittel und mindestens ein Lithiumsalz umfasst.

**12.** Membran nach Anspruch 11, wobei das Lösungsmittel aus den zyklischen und azyklischen Alkylcarbonaten, den Ethern, den Glyme-Verbindungen, den Formiaten, den Estern und den Lactonen ausgewählt ist.

**13.** Membran nach einem der Ansprüche 11 oder 12, wobei das Lithiumsalz aus den folgenden ausgewählt ist: LiPF6 (Lithiumhexafluorphosphat), LiFSI (Lithium-bis(fluorsulfonyl)imid), LiTDI (Lithium-2-trifluormethyl-4,5-dicyanoimidazolat), LiPOF2, LiB(C2O4)2, LiF2B(C2O4)2, LiBF4, LiNO3, LiClO4.

**14.** Membran nach einem der Ansprüche 11 bis 13, wobei der Elektrolyt eine Salzkonzentration von 0,05 bis 5 mol/Liter in dem Lösungsmittel aufweist.

**15.** Membran nach einem der Ansprüche 11 bis 14, wobei das Elektrolyt/Fluorpolymerverhältnis 0,05 bis 20 und vorzugsweise 0,1 bis 10 beträgt.

**16.** Separator für wiederaufladbare Li-Ionen-Batterien, wobei er aus der gelierten Polymermembran nach einem der Ansprüche 11 bis 15 besteht.

**17.** Sekundäre Li-Ionen-Batterie, die eine Anode, eine Kathode und einen Separator umfasst, wobei der Separator eine gelierte Polymermembran nach einem der Ansprüche 11 bis 15 umfasst.

## Claims

**1.** Nonporous fluoropolymer film comprising at least one layer, said layer consisting of a mixture of two fluoropolymers: a fluoropolymer A which comprises at least one copolymer of vinylidene fluoride (VDF) and of hexafluoropropylene (HFP) having an HFP content of greater than or equal to 3% by weight, and a fluoropolymer B which comprises a VDF homopolymer and/or at least one VDF-HFP copolymer, said fluoropolymer B having a weight content of HFP which is at least 3% by weight lower than the weight content of HFP of the polymer A.

**2.** Film according to Claim 1, wherein the HFP content in said at least one VDF-HFP copolymer forming part of the composition of said fluoropolymer A is greater than or equal to 8% and less than or equal to 55%.

**3.** Film according to Claim 1, wherein the fluoropolymer A consists of a single VDF-HFP copolymer having an HFP content of greater than or equal to 3%.

**4.** Film according to Claim 1, wherein the fluoropolymer A consists of a mixture of two or more VDF-HFP copolymers, the HFP content of each copolymer being greater than or equal to 3%.

**5.** Film according to one of Claims 1 to 4, wherein the fluoropolymer B is a homopolymer of vinylidene fluoride or a mixture of homopolymers of vinylidene fluoride.

6. Film according to one of Claims 1 to 4, wherein the fluoropolymer B consists of a single VDF-HFP copolymer having an HFP content of between 1% and 10%.

7. Film according to one of Claims 1 to 6, wherein said mixture comprises:

   i. a weight content of polymer A of greater than or equal to 10% and less than or equal to 99%, preferably greater than or equal to 50% and less than or equal to 95%, advantageously greater than or equal to 25% and less than or equal to 95%, and
   ii. a weight content of polymer B of less than or equal to 90% and greater than 1%, preferably less than 50% and greater than 5%.

8. Film according to one of Claims 1 to 7, said film consisting of a single layer having a thickness of 1 to 1000 $\mu$m, preferably of 1 to 500 $\mu$m and more preferentially of 5 $\mu$m to 100 $\mu$m.

9. Film according to one of Claims 1 to 7, said film having several layers, at least one of which consists of a mixture of said polymers A and B, the overall thickness of the multilayer film being between 2 um and 1000 $\mu$m.

10. Film according to Claim 9, wherein the additional layer or layers are chosen from the following polymeric compositions:

    o a composition consisting of a fluoropolymer chosen from vinylidene fluoride homopolymers and VDF-HFP copolymers containing preferably at least 90% by weight of VDF;
    o a composition consisting of a mixture of fluoropolymer chosen from vinylidene fluoride homopolymers and VDF-HFP copolymers containing preferably at least 85% by weight of VDF, with a methyl methacrylate (MMA) homopolymer and the copolymers containing at least 50% by weight of MMA and at least one other monomer copolymerizable with MMA chosen from: alkyl (meth)acrylates, acrylonitrile, butadiene, styrene and isoprene.

11. Gelled polymer membrane comprising the fluoropolymer film according to one of Claims 1 to 10, and an electrolyte comprising at least one solvent and at least one lithium salt.

12. Membrane according to Claim 11, wherein said solvent is chosen from cyclic and acyclic alkyl carbonates, ethers, glymes, formates, esters and lactones.

13. Membrane according to either of Claims 11 and 12, wherein said lithium salt is chosen from: LiPF$_6$ (lithium hexafluorophosphate), LiFSI (lithium bis(fluorosulfonyl)imide), LiTDI (lithium 2-trifluoromethyl-4,5-dicyanoimidazolate), LiPOF$_2$, LiB(C$_2$O$_4$)$_2$, LiF$_2$B(C$_2$O$_4$)$_2$, LiBF$_4$, LiNO$_3$, LiClO$_4$.

14. Membrane according to one of Claims 11 to 13, wherein said electrolyte has a salt concentration of 0.05 to 5 mol/liter in the solvent.

15. Membrane according to one of Claims 11 to 14, wherein the electrolyte/fluoropolymers ratio is from 0.05 to 20 and preferentially from 0.1 to 10.

16. Separator for a rechargeable Li-ion battery, consisting of the gelled polymer membrane according to one of Claims 11 to 15.

17. Li-ion storage battery comprising an anode, a cathode and a separator, wherein said separator comprises a gelled polymer membrane according to one of Claims 11 to 15.

## RÉFÉRENCES CITÉES DANS LA DESCRIPTION

**Documents brevets cités dans la description**

- US 5296318 A
- US 2019088916 A
- US 2016293957 A

**Littérature non-brevet citée dans la description**

- *CHEMICAL ABSTRACTS,* 96-49-1
- *CHEMICAL ABSTRACTS,* 108-32-7
- *CHEMICAL ABSTRACTS,* 4437-85-8
- *CHEMICAL ABSTRACTS,* 616-38-6
- *CHEMICAL ABSTRACTS,* 105-58-8
- *CHEMICAL ABSTRACTS,* 623-53-0
- *CHEMICAL ABSTRACTS,* 102-09-0
- *CHEMICAL ABSTRACTS,* 13509-27-8
- *CHEMICAL ABSTRACTS,* 623-96-1
- *CHEMICAL ABSTRACTS,* 1333-41-1
- *CHEMICAL ABSTRACTS,* 872-36-6
- *CHEMICAL ABSTRACTS,* 114435-02-8
- *CHEMICAL ABSTRACTS,* 167951-80-6